(19) Europäisches Patentamt
European Patent Office
Office européen des brevets

(11) Veröffentlichungsnummer: **0 010 152**
**A1**

(12) # EUROPÄISCHE PATENTANMELDUNG

(21) Anmeldenummer: **79103341.8**

(22) Anmeldetag: **07.09.79**

(51) Int. Cl.³: **C 08 L 27/18**
C 03 C 25/02, C 08 J 5/04

(30) Priorität: **16.09.78 DE 2840356**

(43) Veröffentlichungstag der Anmeldung:
**30.04.80 Patentblatt 80 9**

(84) Benannte Vertragsstaaten:
**BE CH DE FR GB IT**

(71) Anmelder: **HOECHST AKTIENGESELLSCHAFT**
**Zentrale Patentabteilung Postfach 80 03 20**
**D-6230 Frankfurt Main 80(DE)**

(72) Erfinder: **Fitz, Herbert, Dr.**
**Kantstrasse 41**
**D-8261 Burgkirchen Alz(DE)**

(72) Erfinder: **Kaulich, Herbert**
**Cyprianstrasse 3**
**D-8262 Altötting(DE)**

(72) Erfinder: **Mayer, Franz, Dr.**
**Ludwigshafener Strasse 3**
**D-8261 Burgkirchen Alz(DE)**

(54) **Wässrige Dispersion von Fluorpolymeren mit verbesserten Beschichtungseigenschaften.**

(57) Beschrieben werden wäßrige Dispersionen von Fluorpolymeren, die ein aus der Schmelze nicht verarbeitbares Tetrafluoräthylen-Polymerisat, insbesondere Polytetrafluoräthylen in kolloidaler Verteilung enthalten, wobei diesen Dispersionen ein aus der Schmelze verarbeitbares Copolymerisat von Tetrafluoräthylen mit fluorhaltigen Comonomeren in Form eines Pulvers mit Teilchen von überkolloidaler Größe (mittlere Teilchengröße von 5 bis 10 $\mu m$) zugesetzt und darin suspendiert wird. Das zugesetzte, aus der Schmelze verarbeitbare Copolymerisat enthält neben Tetrafluoräthylen vorzugsweise Vinylfluorid, Vinylidenfluorid, Chlortrifluoräthylen und insbesondere Hexafluorpropylen und Perfluor (alkylvinyl)-äther mit 2 bis 4 C-Atomen. Auch Terpolymerisate von Tetrafluoräthylen mit den beiden letztgenannten Comonomeren können eingesetzt werden. Ferner können die Dispersionen Hilfsfilmbildner, Füllstoffe und Pigmente enthalten. Die genannten Dispersionen eignen sich besonders zur Beschichtung oder Trocknung von Geweben, insbesondere von Glasfasergeweben, oder von porösen Formkörpern.

EP 0 010 152 A1

Croydon Printing Company Ltd

HOECHST AKTIENGESELLSCHAFT HOE 78/F 923 Dr.SC/ei

Wäßrige Dispersion von Fluorpolymeren mit verbesserten Beschichtungseigenschaften

Die Erfindung betrifft wäßrige Disperionen von Fluorpolymeren, enthaltend ein aus der Schmelze nicht verarbeitbares Tetrafluoräthylen-Polymerisat in kolloidaler Verteilung, ein nichtionisches Dispergiermittel und ein aus der Schmelze verarbeitbares Copolymerisat von Tetrafluoräthylen und deren Verwendung zu Beschichtungszwecken, insbesondere zur Beschichtung von temperaturbeständigen Geweben.

Dispersionen von Fluorpolymeren, die sich insbesondere zur Beschichtung temperaturbeständiger Gewebe, wie Glasfaser- oder Metallgewebe, eignen, sind seit längerem bekannt. Derart mit Fluorpolymeren beschichtete Gewebe weisen eine Reihe bemerkenswerter Eigenschaften, wie beispielsweise eine hohe haftabweisende Wirkung, einen niedrigen Reibungskoeffizienten und eine gute Witterungsbeständigkeit auf. Solche mit Fluorpolymeren beschichtete Gewebe finden in zunehmendem Maß Anwendung in einer großen Zahl von Industriezweigen. Beispielsweise sei der Einsatz von mit Polytetrafluoräthylen beschichteten Glasfasergeweben zur Herstellung von haftabweisenden Transportbändern und Trennfolien, von Filtern, von schalldämmenden Vorhängen und neuerdings auch von Dachabdeckungen für luftgetragene oder zeltartige Dachkonstruktionen genannt.

Bei den genannten Anwendungen werden an die derart beschichteten Gewebe hohe Anforderungen hinsichtlich ihrer mechanischen Beanspruchung gestellt, auch muß die Bildung von Rissen und Poren beim Beschichtungsvorgang möglichst weitgehend verhindert werden. Die seit langem bekannten wäßrigen Dispersionen von reinem Polytetrafluoräthylen werden diesen Anforderungen nicht in vollem Umfang gerecht. Es hat deshalb nicht an Versuchen gefehlt, die für die Beschichtung solcher Gewebe eingesetzten Dispersionen von Fluorpolymeren durch die verschiedensten Maßnahmen zu verändern, so daß gerade die genannten Eigenschaften des beschichteten Gewebes verbessert werden können.

So ist bereits versucht worden, die genannten Nachteile durch Zugabe von Zusätzen, wie beispielsweise von wasserlöslichen Alkalisilicaten (US-PS 2 710 266), durch Zugabe von Füllstoffen, wie beispielsweise Kryolith (US-PS 2 717 220) oder in neuerer Zeit insbesondere von Glaskugeln (DE-OS 23 15 259, DE-AS 26 01 569) zu beseitigen. Ein anderer Weg, insbesondere zur Verbesserung der Riß- und Porenfreiheit besteht darin (US-PS 3 790 403), das Gewebe zunächst mit Polytetrafluoräthylen zu beschichten, auf diese Beschichtung einen Deckbelag aus einem aus der Schmelze verarbeitbaren Copolymeren des Tetrafluoräthylens aufzubringen und darauf gegebenenfalls eine weitere Deckschicht von Polytetrafluoräthylen zu fixieren.

Mittels der genannten Produkte und Verfahren gelingt es zwar, beschichtete Gewebe mit ausreichender Riß- und Porenfreiheit herzustellen, die mechanische Festigkeit, insbesondere die Weiterreißfestigkeit dieser so beschichteten Gewebe ist jedoch für viele Anwendungen nicht befriedigend. Insbesondere ist auch das aufeinanderfolgende Aufbringen verschiedener Schichten verfahrensmäßig umständlich und kostspielig.

Aus der US-PS 3 051 683 und der US-PS 3 925 292 ist es auch bereits bekannt, Polytetrafluoräthylen und in der Schmelze verarbeitbare Copolymerisate des Tetrafluoräthylens in Form

ihrer jeweiligen wäßrigen Dispersionen zu vermischen. Derartige Mischdispersionen können anschließend gemeinsam koaguliert werden, wobei die entstehende Feststoffmischung vornehmlich der Herstellung von Formkörpern dient. Nach Angaben in der US-PS 3 051 683 sollen derart hergestellte Formkörper, insbesondere Filme, verbesserte Reißfestigkeiten gegenüber solchen aufweisen, die ausschließlich entweder aus Polytetrafluoräthylen oder aus dem aus der Schmelze verarbeitbaren Copolymeren des Tetrafluoräthylens hergestellt werden. Die genannten Mischdispersionen können auch direkt Verwendung finden, beispielsweise zur Beschichtung von Geweben. Derart beschichtete Gewebe weisen jedoch im Gegensatz zu den vorgenannten Angaben für die aus Feststoffmischungen hergestellten Formkörper verschlechterte mechanische Eigenschaften auf, wenn man sie mit Geweben vergleicht, die mit reinen Polytetrafluoräthylen-Dispersionen beschichtet werden (siehe Vergleichsversuche A und B).

Es bestand deshalb die Aufgabe, eine wäßrige Dispersion von Fluorpolymeren zur Verfügung zu stellen, die die Herstellung von mit Fluorpolymeren beschichteten Geweben mit verbesserter mechanischer Festigkeit und mindestens ebenbürtiger Riß- und Porenfreiheit, verglichen mit den bekannten, mit Fluorpolymeren beschichteten Geweben, ermöglicht.

Diese Aufgabe wird erfindungsgemäß durch Bereitstellung einer wäßrigen Dispersion von Fluorpolymeren der eingangs genannten Art gelöst, die dadurch gekennzeichnet ist, daß das aus der Schmelze verarbeitbare Copolymerisat von Tetrafluoräthylen mit fluorhaltigen Comonomeren eine mittlere Teilchengröße zwischen 5 und 100 µm aufweist und in der Dispersion in einem Anteil von 2 bis 50 Gew.-%, bezogen auf die Gesamtgewichtsmenge an Fluorpolymeren, enthalten ist.

Diese wäßrigen Dispersionen von Fluorpolymeren zeichnen sich also gegenüber den bisher bekannten dadurch aus, daß das aus der Schmelze nicht verarbeitbare Tetrafluoräthylen-Polymerisat darin in kolloidaler Verteilung, das aus der Schmelze

verarbeitbare Copolymerisat von Tetrafluoräthylen mit fluorhaltigen Comonomeren dagegen in überkolloidaler Verteilung, d. h. mit mittleren Teilchengrößen, die deutlich über denen kolloider Dispersionen liegen, anwesend ist. Das aus der Schmelze nicht verarbeitbare Tetrafluoräthylen-Polymerisat weist die üblichen mittleren Teilchengrößen von kolloiden Teilchen im Bereich von etwa 0,01 µm bis etwa 3,0 µm auf. Das aus der Schmelze verarbeitbare Copolymerisat von Tetrafluoräthylen mit fluorhaltigen Comonomeren besitzt dagegen in der erfindungsgemäßen Dispersion eine mittlere Teilchengröße von 5 bis 100 µm, vorzugsweise von 10 bis 50 µm. Gewebe, die mit der erfindungsgemäßen Dispersion beschichtet wurden, weisen nicht nur eine ausgezeichnete Riß- und Porenfreiheit auf, sondern diese Dispersionen verleihen auch den so beschichteten Geweben überraschenderweise eine höhere mechanische Festigkeit gegenüber solchen Geweben, die mit Gemischen von wäßrigen Dispersionen beschichtet wurden, in denen beide Komponenten in kolloidaler Teilchengröße in der vorstehend genannten Größenordnung vorliegen.

Während also, worauf oben bereits hingewiesen wurde, mit Mischdispersionen aus Polytetrafluoräthylen und den aus der Schmelze verarbeitbaren Copolymeren des Tetrafluoräthylens beschichtete Gewebe bezüglich der mechanischen Eigenschaften ungünstiger liegen als solche, die mit einer reinen Polytetrafluoräthylen-Dispersion beschichtet wurden, bewirkt der Zusatz der in der Schmelze verarbeitbaren Copolymeren des Tetrafluoräthylens in Form von Teilchen überkolloidaler Größe zu Polytetrafluoräthylen-Dispersionen völlig überraschend eine drastische Verbesserung der mechanischen Eigenschaften eines beschichteten Gewebes, verglichen mit den genannten Mischdispersionen und den Polytetrafluoräthylen-Dispersionen (vgl. Tabelle I, Beispiele 1 bis 8 und Vergleichsversuche A, B und C).

Bei den aus der Schmelze nicht verarbeitbaren Tetrafluoräthylen-Polymerisaten, die in der erfindungsgemäßen Dispersion in kolloidaler Verteilung enthalten sind, handelt es sich um

solche Polymerisate, die weitaus überwiegend oder allein aus Einheiten des Tetrafluoräthylens bestehen. Solche Polymerisate weisen eine Schmelzviskosität von $>1 \cdot 10^8$ Pas auf (bestimmt nach der Methode von G. Ajroldi et al, J. appl. Polymer Science, Vol. 14, 1970, Seiten 79 bis 88; Temperatur 350 °C, Belastung: $1,8 \cdot 10^4$ Pa) und sind daher nach den üblichen Formgebungsverfahren für Thermoplasten nicht verarbeitbar. Es handelt sich dabei vorzugsweise um reines Polytetrafluoräthylen. Das Polytetrafluoräthylen kann aber auch eine untergeordnete Menge bis höchstens 2 Gew.-%, vorzugsweise bis 1 Gew.-%, eines mit Tetrafluoräthylen copolymerisierbaren, ganz oder teilweise halogenierten Monomeren enthalten, wie beispielsweise Vinylidenfluorid oder Vinylfluorid, vorzugsweise aber Trifluorchloräthylen, Hexafluorpropen, einen Perfluor-[3.6-dimethyl-1.4-dioxanyl-2-vinyläther] (vgl. US-PS 4 013 689) oder einen Perfluor(alkylvinyl)-äther, dessen Perfluoralkylrest 2 bis 4, vorzugsweise 3 Kohlenstoffatome besitzt. Derartige Polymerisate werden üblicherweise als modifiziertes Polytetrafluoräthylen bezeichnet. Ihre Schmelzviskosität liegt im obengenannten Bereich und somit nur geringfügig unter derjenigen des reinen Polytetrafluoräthylens. Sie sind daher aus der Schmelze ebenfalls nicht verarbeitbar und unterscheiden sich hierin von den üblichen Copolymeren.

Die Herstellung solcher Polytetrafluoräthylen-Dispersionen ist beispielsweise beschrieben in den US-Patentschriften 2 559 752, 3 037 953, 3 142 665, 3 654 210, 4 058 578, 3 088 941 sowie der GB-PS 1 246 834.

Als weitere Komponenten enthält die erfindungsgemäße wäßrige Dispersion von Fluorpolymeren ein nicht-ionisches Netzmittel, das entweder bereits in der vorstehend beschriebenen Polytetrafluoräthylen-Dispersion enthalten sein kann, das aber auch ganz oder teilweise zur Stabilisierung der einzumischenden festen Bestandteile zugemischt werden kann. Der Zusatz solcher nicht-ionischer Dispergiermittel zu Polytetrafluoräthylen-Dispersionen ist bekannt. Es handelt sich

vor allem um Dispergiermittel solcher Verbindungsklassen, wie sie in der US-PS 3 925 292 ausführlich beschrieben worden sind. Als Beispiele für solche nicht-ionischen Dispergiermittel, die bevorzugt verwendet werden, seien hier genannt:

Alkylphenoloxäthylate der allgemeinen Formel

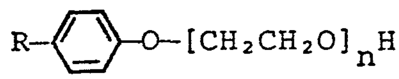

mit n = 4 bis 20, wobei R ein Alkylrest mit 4 bis 20 C-Atomen ist;

Fettalkoholoxäthylate der allgmeinen Formel

$$R\text{-}O\text{-}[CH_2CH_2O]_nH$$

mit n = 4 bis 20, wobei R ein Alkylrest mit 4 bis 20 C-Atomen ist,

und Äthylenoxid-Propylenoxid-Blockcopolymerisate der allgemeinen Formel

$$H[OCH_2CH_2]_x\text{-}[O\text{-}\underset{CH_3}{\underset{|}{C}}H\text{-}CH_2]_y\text{-}[OCH_2CH_2]_zOH$$

mit x = 2 bis 20, y = 10 bis 50 und z = 2 bis 20. Es können auch Gemische der genannten Dispergiermittel eingesetzt werden.

Die Menge der in der erfindungsgemäßen Dispersion enthaltenen nicht-ionischen Dispergiermittel liegt, bezogen auf die Summe der darin enthaltenen Fluorpolymeren, zwischen 2 und 15, vorzugsweise zwischen 3 und 10 Gew.-%.

Unter einem in der Schmelze verarbeitbaren Copolymerisat von Tetrafluoräthylen mit fluorhaltigen Comonomeren wird hier ein solches thermoplastisches und nicht-elastomeres Copolymerisat verstanden, dessen Schmelzviskosität höchstens $1 \cdot 10^6$ Pas und üblicherweise mindestens $1 \cdot 10^2$ Pas (bestimmt nach DIN-Norm Nr. 53 735 über den Schmelzindex; Temperatur: 372 °C; Belastung: $45 \cdot 10^3$ Pa; Düse: 2,1 mm

Durchmesser, 8 mm Länge) beträgt, das daher nach üblichen thermoplastischen Verarbeitungsmethoden verformt werden kann.

Derartige Copolymerisate enthalten neben Tetrafluoräthylen ein oder mehrere, vorzugsweise 1 oder 2, teilfluorierte oder perfluorierte Comonomere, wobei diese Comonomeren innerhalb des genannten Schmelzviskositätsbereichs meist in einem Anteil von 2 bis 30 Gew.-%, vorzugsweise von 2 bis 20 Gew.-%, bezogen auf das Gesamtgewicht des Copolymerisats und die Summe aller Comonomeren, vorliegen. Derartige Comonomere sind Vinylfluorid, Vinylidenfluorid, Chlortrifluoräthylen, Hexafluorpropylen und Perfluor(alkylvinyl)äther mit 2 bis 4 C-Atomen im Perfluoralkylrest. Bevorzugt im Rahmen der erfindungsgemäßen wäßrigen Fluorpolymeren-Dispersionen ist der Einsatz von Copolymerisaten von Tetrafluoräthylen und Hexafluorpropylen, wie sie zum Beispiel bekannt sind aus der US-PS 2,946,763. Insbesondere bevorzugt sind Copolymerisate des Tetrafluoräthylens mit Perfluor(alkylvinyl)äthern, deren Perfluoralkylrest 2 bis 4 C-Atome besitzt, wie sie zum Beispiel beschrieben sind in den US-Patentschriften 3,132,123 und 3,635,926, sowie ferner Terpolymerisate von Tetrafluoräthylen mit Hexafluorpropylen und Perfluor(alkylvinyl)äthern, deren Perfluoralkylrest 2 bis 4 C-Atome besitzt, wie sie beschrieben sind in der DE-OS 27 10 501 und der DE-OS 26 39 109.

Solche Terpolymerisate enthalten 0,5 bis 8, vorzugsweise 0,8 bis 6,1 Gew.-%, eines solchen Perfluor(alkylvinyl)äthers und 0,4 bis 12, vorzugsweise 0,4 bis 3,0 Gew.-%, Hexafluorpropylen sowie (Rest gegen 100 Gew.-%) Tetrafluoräthylen. Bevorzugt ist der Perfluor(n-propylvinyl)äther.

Der Gewichtsanteil der aus der Schmelze verarbeitbaren Copolymerisate von Tetrafluoräthylen mit fluorhaltigen Comonomeren in den erfindungsgemäßen Dispersionen liegt zwischen 2 und 50 Gew.-%, vorzugsweise zwischen 4 und 40 Gew.-%, bezogen auf das Gesamtgewicht beider Fluorpolymeren-Komponenten, also des aus der Schmelze nicht verarbeitbaren Tetrafluoräthylen-Polymerisats und des aus der Schmelze verarbeitbaren Tetrafluoräthylen-Copolymerisats.

Die erfindungsgemäßen wäßrigen Dispersionen von Fluorpolymeren werden so eingestellt, daß der Feststoffgehalt, d. h. die Gewichtssumme Feststoff an beiden Fluorpolymeren-Komponenten, zwischen 15 und 65 Gew.-%, vorzugsweise zwischen 20 und 60 Gew.-%, liegt.

Die Pulver der aus der Schmelze verarbeitbaren Copolymerisate des Tetrafluoräthylens mit fluorhaltigen Comonomeren, deren mittlere Teilchengröße im genannten Bereich liegt, werden erhalten, indem man die bei der Copolymerisation nach den obengenannten Herstellungsverfahren anfallenden wäßrigen Dispersionen durch Zusatz von bekannten Koagulierungsmitteln, wie beispielsweise von Säuren, von Metallsalzen oder von organischen Lösungsmitteln oder auch durch Einwirkung starker Scherkräfte, wie hochtouriges Rühren, Pumpen und dergleichen, zur Koagulation bringt. Das koagulierte Material wird durch Filtrieren, Dekantieren oder entsprechende Trennverfahren vom flüssigen Serum abgetrennt und bei Temperaturen über 100 °C, jedoch deutlich unter dem Schmelzpunkt des jeweiligen Copolymerisats, getrocknet. Ein weiterer Weg zur Herstellung solcher Pulver ist die direkte Sprühtrocknung der aus der Polymerisation erhaltenen Dispersion. Schließlich ist es auch möglich, auf dem Wege der Suspensionspolymerisation Pulver solcher Copolymerisate zu gewinnen, indem man die Suspensionspolymerisation in Gegenwart besonders geringer Mengen von Emulgatoren durchführt, was zu suspendierten Teilchen mit geringerer Teilchengröße führt als sie bei üblichen Suspensionspolymerisations-Verfahren bekannt sind. Solche Pulver können mit geeigneten Trennverfahren aus der wäßrigen Suspension abgetrennt und direkt für die erfindungsgemäßen Dispersionen eingesetzt werden.

Die Herstellung der erfindungsgemäßen Dispersionen kann üblicherweise so erfolgen, daß das pulverförmige, aus der Schmelze verarbeitbare Copolymerisat des Tetrafluoräthylens mit fluorhaltigen Comonomeren direkt der Dispersion des aus der Schmelze nicht verarbeitbaren Tetrafluoräthylen-Polymerisats zugemischt wird. Da jedoch die Scherstabilität von Polytetrafluoräthylen-Dispersionen begrenzt ist, ist es zweckmäßig, das pulverförmige Copolymerisat und gegebenenfalls auch andere feste Bestandteile der Rezeptur zunächst mittels geeigneter Dispergier-Aggregate in Wasser und gegebenenfalls einem Zusatz von nicht-ionischem Dispergiermittel vorzudispergieren und die so erhaltene Suspension unter langsamem Rühren der Polytetrafluoräthylen-Dispersion zuzumischen, wobei durch Wahl geeigneter Feststoffkonzentrationen und Mengenanteile der Feststoffgehalt und die proportionalen Anteile der beiden Fluorpolymeren-Komponenten der erfindungsgemäßen Dispersion eingestellt werden können.

Neben den beiden Fluorpolymeren-Komponenten und dem nichtionischen Dispergiermittel können die erfindungsgemäßen Dispersionen von Fluorpolymeren noch zusätzlich übliche anorganische oder polymere Füllstoffe sowie Pigmente enthalten, üblicherweise in einer Menge von 1 bis 30 Gew.-%, vorzugsweise 1 bis 20 Gew.-%, bezogen auf das Gesamtgewicht der Dispersion. Solche Füllstoffe und Pigmente sind beispielsweise Titandioxid, Chrom(III)-oxid, Eisen(III)-oxid, Cadmiumsulfid, Cadmiumselenid, Ruß, Spinelle, kolloidales Siliciumdioxid, Bentonit, Diatomeenerde, Glimmer, Glasfasern, Glaskugeln, Aluminiumoxid, Keramikpulver, Polytetrafluoräthylen-Pulver (auch Pulver von Polytetrafluoräthylen-Wachsen, d.h. niedermolekulares PTFE) oder Polytetrafluoräthylen-Fasern. Die mittlere Teilchengröße der genannten Füllstoffe und Pigmente sollte 100 µm, die Länge der Polytetrafluoräthylen-Fasern 3 mm nicht wesentlich übersteigen. Soweit es sich bei diesen Füllstoffen um Fluorpolymere handelt, sind sie in der obengenannten Gewichtssumme der beiden Fluorpolymerkomponenten in der Grunddispersion nicht enthalten.

Ferner können die erfindungsgemäßen Dispersionen noch Zusatzstoffe enthalten, die der Viskositätsregelung, der Verbesserung der Filmbildung und/oder der Verbesserung

der Benetzung oder des Verlaufs beim Beschichtungsvorgang dienen. Beispiele für derartige Stoffe sind die verschiedenartigsten organischen Lösungsmittel, wie Glykole und Polyglykole sowie deren Äther oder Ester, Alkohole, Carbonsäureester, aliphatische Kohlenwasserstoffe, alkylierte Aromaten wie Toluol, Xylol und analoge Verbindungen sowie Lösungen von Cellulosederivaten oder Polyvinylalkohol. Besonders zweckmäßig ist der Zusatz von 0,5 bis 5 Gew.-%, bezogen auf das Gesamtgewicht der Dispersion, an üblichen Polysiloxanen, die die Filmbildung begünstigen. Derartige Polysiloxane sind beispielsweise Phenyl-, Methyl-, Phenylmethylpolysiloxane.

Das Aufbringen der erfindungsgemäßen wäßrigen Dispersionen von Fluorpolymeren auf das zu beschichtende Gewebe kann beispielsweise durch Aufspritzen oder Aufrollen der Dispersion auf das Gewebe oder durch Eintauchen des Gewebes in die Dispersion erfolgen. Als technisch günstigste Verfahrensweise ist das kontinuierliche Tränken des Gewebes mittels handelsüblicher Gewebebeschichtungs-Maschinen anzusehen.

Die erfindungsgemäßen Dispersionen eignen sich nicht nur, wie oben bereits ausgeführt, zur Beschichtung oder Tränkung von Geweben, insbesondere hochtemperaturbeständigen Geweben, wie beispielsweise Geweben aus Glasfasern, Metallfäden, aus hochtemperaturfesten Kunststoffen oder auch aus üblichen natürlichen oder Synthesefasern, sondern sie sind darüberhinaus auch allen Anwendungen zugänglich, für die nach dem Stand der Technik bekannte,reine Polytetrafluoräthylen-Dispersionen eingesetzt werden können. Dies betrifft beispielsweise die Tränkung von Formkörpern (Filzen, Strängen, Flechtpackungen) aus Asbestfasern oder Polytetrafluoräthylen-Fasern, die Beschichtung von Metallen und die Formulierung von mit synthetischen Harzen gebundenen Einschicht-Beschichtungssystemen.

Die folgenden Beispiele sollen die Erfindung erläutern. Die darin vorgenommenen Beschichtungen wurden auf einer aus einer Abspulvorrichtung, einer Tauchwanne, einem Trocken-Sinterofen und einer Aufwickelvorrichtung bestehenden handelsüblichen Gewebebeschichtungs-Maschine vorgenommen.

Bei diesen Beispielen, von denen die Versuche A, B und C Vergleichsbeispiele sind, wurden die erfindungsgemäßen Dispersionen bzw. Vergleichsmischungen zum Beschichten von Glasgewebe eingesetzt.

Es wurde auf einer Beschichtungsmaschine durch Tauchen ein 1 m breites, thermisch entschlichtetes Glasfasergewebe (Glastyp EC 9; 68 · 3 tex; mit 7 Fäden/cm Kette und 7,5 Fäden/cm Schuß, und einem Flächengewicht von 295 g/m²) 3- bzw. 6mal mit 0,4 m/Minute mit Abstreifvorrichtung beschichtet, wobei nach jedem Tauchvorgang bei 446 °C gesintert wurde.

Von den so erhaltenen beschichteten Glasfasergeweben wurde die Auftragsmenge durch Auswiegen eines Stückes von 600 cm², die Reißfestigkeit nach DIN Norm 53 857, die Weiterreißfestigkeit nach DIN Norm 53 356 und die Schälfestikeit nach dem thermischen Versiegeln von zwei Stücken des gleichen Gewebes bestimmt.

Die Stücke wurden versiegelt, indem vom gleichen Gewebe 2 Stücke mit 5 cm Breite und 10 cm Länge mit einer 200 µm dicken Folie aus einem Terpolymerisat, wie unter Beispiel 1 b) beschrieben, als Zwischenlage übereinander gelegt, und mit beheizbaren Schweißbacken von 0,5 cm Breite bei 370 °C 5 Minuten lang mit 11 kg belastet wurden.
Der Schälversuch wurde auf einer Zugprüfmaschine bei einer Abzugsgeschwindigkeit von 100 mm/Min. bestimmt, wobei je ein nichtversiegeltes Ende der Streifen in die Klemmbacken eingespannt wurde.

Beispiel 1

Durch Rühren wurde eine Mischung aus

a) 26,00 kg Polytetrafluoräthylendispersion, die 58 Gew.-% Feststoff mit einer Teilchengröße von durchschnittlich 0,3 µm und 5 Gew.-%, bezogen auf Feststoff, eines nichtionischen Dispergiermittels (p-Octylphenol mit 9 Äthylenoxid-Einheiten oxäthyliert) enthielt,

b) 1,68 kg pulverförmigem Terpolymerisat mit der Zusammensetzung 95,9 Gew.-% Tetrafluoräthylen-Einheiten, 1,5 Gew.-% Hexafluorpropylen-Einheiten, 2,6 Gew.-% Perfluorpropyl-perfluorvinyläther-Einheiten, mit einer Schmelzviskosität von 2,8 · $10^3$ Pas (gemessen bei 372 °C unter einer Schubspannung von 45 · $10^3$ Pa), einem Schmelzpunkt von 312 °C und einer mittleren Teilchengröße $d_{50}$ von 15,5 µm (weniger als 3 % Teilchen <3 µm),

c) 0,45 kg nicht-ionischem Dispergiermittel (p-Octylphenol mit 9 Äthylenoxid-Einheiten oxäthyliert),

d) 5,75 kg entsalztem Wasser,

hergestellt, wobei die Komponenten b) bis d) vorher durch schnelles Rühren zusammengemischt und anschließend unter langsamem Rühren zur Komponente a) gegeben wurden. Die Mischung wurde, wie beschrieben, verarbeitet und das beschichtete Glasfasergewebe geprüft, wobei folgende Eigenschaften festgestellt wurden:

| Tauchungen | Auftrag g/m² | Reißfestigkeit N | Weiterreißfestigkeit N |
|---|---|---|---|
| 3 | 128 | 2100 | 72 |
| 6 | 165 | 2100 | 71 |

Beispiel 2

Es wurde eine Mischung aus den gleichen Bestandteilen wie in Beispiel 1 hergestellt, aber anstelle des Terpolymeren, wie unter b) beschrieben, wurde ein pulverförmiges Copolymeres mit der Zusammensetzung 97,5 Gew.-% Tetrafluoräthylen und 2,5 Gew.-% Perfluorpropyl-perfluorvinyläther mit einer Schmelzviskosität von 2,5 · $10^3$ Pas (bei 372 °C und einer

Schubspannung von 45 · $10^3$ Pa) und einer mittleren Teilchengröße $d_{50}$ von 19,5 µm (weniger als 3 % Teilchen <3 µm) als Komponente b) verwendet. Die Mischung wurde, wie beschrieben, verarbeitet und geprüft:

| Tauchungen | Auftrag g/m² | Reißfestigkeit N | Weiterreißfestigkeit N | Schälfestigkeit N |
|---|---|---|---|---|
| 3 | 178 | 1950 | 80 | 71 |
| 6 | 282 | 2200 | 57 | 85 |

Beispiel 3

Eine Mischung aus den gleichen Bestandteilen wie in Beispiel 1, jedoch (statt des Terpolymeren) mit einem pulverförmigen Copolymeren mit der Zusammensetzung 83 Gew.-% Tetrafluoräthylen und 17 Gew.-% Hexafluorpropylen mit einer Schmelzviskosität von 5 · $10^3$ Pas (bei 372 °C und einer Schubspannung von 45 · $10^3$ Pa) und einer mittleren Teilchengröße $d_{50}$ von 21,5 µm (weniger als 3 % Teilchen <3 µm) als Komponente b) wurde, wie beschrieben, hergestellt, verarbeitet und geprüft:

| Tauchungen | Auftrag g/m² | Reißfestigkeit N | Weiterreißfestigkeit N |
|---|---|---|---|
| 3 | 129 | 2150 | 73 |
| 6 | 168 | 2250 | 78 |

Beispiel 4

Es wurde eine Mischung wie in Beispiel 1 hergestellt, die jedoch anstelle der nichtmodifizierten Polytetrafluoräthylen-Dispersion (Komponente a) eine mit 0,1 Gew.-% Chlortrifluoräthylen modifizierte Polytetrafluoräthylen-Dispersion mit einer Schmelzviskosität des Feststoffes von 25 · $10^9$ Pas (bei 372 °C und einer Belastung von 12 g) enthielt und verarbeitet. Die Prüfung ergab:

| Tauchungen | Auftrag g/m² | Reiß-festigkeit N | Weiterreiß-festigkeit N |
|---|---|---|---|
| 3 | 135 | 1950 | 80 |
| 6 | 170 | 2150 | 81 |

Beispiel 5

Durch Rühren wurde eine Mischung aus

a) 26,00 kg Polytetrafluoräthylen-Dispersion, die 58 Gew.-% Feststoff mit einer Teilchengröße von duchschnittlich 0,3 µm und 5 Gew.-%, bezogen auf Feststoff, eines nicht-ionischen Dispergiermittels (p-Octylphenol mit 9 Äthylenoxid-Einheiten oxäthyliert) enthielt,

b) 1,68 kg pulverförmigem Terpolymerisat mit der Zusammensetzung 95,9 Gew.-% Tetrafluoräthylen-Einheiten, 1,5 Gew.-% Hexafluorpropylen-Einheiten, 2,6 Gew.-% Perfluorpropyl-perfluorvinyläther-Einheiten, mit einer Schmelzviskosität von $2,8 \cdot 10^3$ Pas (gemessen bei 372 °C unter einer Schubspannung von $45 \cdot 10^3$ Pa) und einem Schmelzpunkt von 312 °C (Teilchengröße wie Beispiel 1),

c) 0,45 kg nicht-ionischem Dispergiermittel (p-Octylphenol mit 9 Äthylenoxid-Einheiten oxäthyliert),

d) 1,08 kg Siliconharzemulsion mit der Zusammensetzung
25 Gew.-% Phenyl-Methylsiloxan,
25 Gew.-% Xylol,
50 Gew.-% Wasser,

e) 5,75 kg entsalztem Wasser,

hergestellt, wobei die Komponenten b) bis e) vorher durch schnelles Rühren zusammengemischt und anschließend unter langsamem Rühren zur Komponente a) gegeben wurden. Die Mischung wurde, wie beschrieben, verarbeitet und geprüft:

| Tauchungen | Auftrag g/m² | Reiß-festigkeit N | Weiterreiß-festigkeit N | Schäl-festigkeit N |
|---|---|---|---|---|
| 3 | 133 | 2500 | 84 | 66 |
| 6 | 174 | 2200 | 84 | 64 |

Beispiel 6

Eine Mischung aus den gleichen Bestandteilen wie in Beispiel 5, jedoch mit nur 0,79 kg des pulverförmigen Terpolymeren (Komponente b) und 4,86 kg entsalztem Wasser (Komponente e) wurde hergestellt, verarbeitet und geprüft:

| Tauchungen | Auftrag g/m² | Reißfestigkeit N | Weiterreißfestigkeit N | Schälfestigkeit N |
|---|---|---|---|---|
| 3 | 127 | 2400 | 74 | 52 |
| 6 | 181 | 2400 | 76 | 71 |

Beispiel 7

Es wurde eine Mischung aus den gleichen Bestandteilen wie in Beispiel 6 hergestellt, jedoch zusätzlich mit 0,79 kg Glaskugeln (mit einem Durchmesser kleiner als 44 µm und mit einem spezifischen Gewicht von 2,46 g/cm³) versetzt. Als Komponente e) diente 5,65 kg entsalztes Wasser (statt 4,86 kg).

Das Glasfasergewebe, das mit dieser Mischung beschichtet wurde, hatte folgende Eigenschaften:

| Tauchungen | Auftrag g/m² | Reißfestigkeit N | Weiterreißfestigkeit N | Schälfestigkeit N |
|---|---|---|---|---|
| 3 | 126 | 1950 | 60 | 53 |
| 6 | 169 | 1920 | 60 | 65 |

Beispiel 8

Eine Mischung wurde mit den gleichen Bestandteilen wie in Beispiel 7 hergestellt, verarbeitet und geprüft, wobei jedoch statt der Glaskugeln ein niedrigmolekulares Polytetrafluoräthylenpulver (PTFE-Wachs) mit einer mittleren Teilchengröße von 7 µm und einer Schmelzviskosität von $1{,}5 \cdot 10^3$ Pas (bei 380 °C, Schubspannung $45 \cdot 10^3$ Pa) verwendet wurde. Die Prüfung ergab:

0010152

| Tauchungen | Auftrag g/m² | Reißfestigkeit N | Weiterreißfestigkeit N | Schälfestigkeit N |
|---|---|---|---|---|
| 3 | 133 | 2020 | 62 | 69 |
| 6 | 171 | 2040 | 82 | 78 |

Vergleichsbeispiel A

Eine Mischung aus 26 kg einer Polytetrafluoräthylendispersion (wie in Beispiel 1 beschrieben), 3,37 kg einer feinteiligen, wäßrigen Dispersion eines Copolymeren (mit der gleichen Zusammensetzung wie das pulverförmige Copolymere des Beispiels) mit einem Feststoffgehalt von 50 Gew.-% und einer mittleren Teilchengröße von ca. 0,2 µm sowie mit einem Gehalt von 5 Gew.-% eines nicht-ionischen Dispergiermittels (p-Octylphenol mit 9 Äthylenoxid-Einheiten oxäthyliert), weiteren 0,45 kg des genannten nicht-ionischen Dispergiermittels, wie in Beispiel 1 beschrieben, und 4,06 kg entsalztes Wasser wurde analog Beispiel 1 hergestellt und auf Glasgewebe beschichtet. Die Prüfung ergab:

| Tauchungen | Auftrag g/m² | Reißfestigkeit N | Weiterreißfestigkeit N | Schälfestigkeit N |
|---|---|---|---|---|
| 3 | 136 | 1500 | 22 | 43 |
| 6 | 180 | 1630 | 21 | 85 |

Vergleichsbeispiel B

Eine Mischung aus 40 kg einer wäßrigen Polytetrafluoräthylen-Dispersion, wie in Beispiel 5 beschrieben, und 0,69 kg eines nicht-ionischen Dispergiermittels, wie in Beispiel 5 beschrieben, wurde ohne Füllstoffe durch langsames Rühren hergestellt und verarbeitet. Die Prüfung des beschichteten Glasfasergewebes brachte folgende Ergebnisse:

| Tauchungen | Auftrag g/m² | Reiß-festigkeit N | Weiterreiß-festigkeit N |
|---|---|---|---|
| 3 | 157 | 1600 | 47 |
| 6 | 294 | 1900 | 44 |

Vergleichsbeipiel C

Eine Mischung aus 40 kg einer wäßrigen Polytetrafluoräthylen-Dispersion, wie in Beispiel 5 beschrieben, 2,58 kg Glaskugeln, wie in Beispiel 7 beschrieben, 1,66 kg einer Siliconharzemulsion, wie in Beispiel 5 beschrieben, und 0,69 kg eines nicht-ionischen Dispergiermittels, wie in Beispiel 5 beschrieben, wurde hergestellt und verarbeitet. Die Prüfung des beschichteten Glasfasergewebes brachte folgende Ergebnisse:

| Tauchungen | Auftrag g/m² | Reiß-festigkeit N | Weiterreiß-festigkeit N |
|---|---|---|---|
| 1 | 157 | 1900 | 55 |
| 2 | 221 | 2000 | 51 |

Die mittlere Teilchengröße $d_{50}$ der aus der Schmelze verarbeitbaren Copolymeren des Tetrafluoräthylens wurde nach dem Prinzip der Sedimentationsanalyse in wäßriger Suspension in einem "Particle Size Analyzer", Modell PSA-2, der Firma Hitachi, Ltd. Tokio (Japan), bestimmt.

Die erhaltenen Prüfergebnisse der beschichteten Glasgewebe sind in Tabelle 1 zusammengefaßt:

Tabelle 1

| Beispiel | Aufträge | Auftrag $g/m^2$ | Reißfestigkeit DIN 53 857 N | Weiterreißfestigkeit DIN 53 356 N | Schälfestigkeit N |
|---|---|---|---|---|---|
| 1 | 3 | 128 | 2100 | 72 | nicht best. |
| | 6 | 165 | 2100 | 71 | nicht best. |
| 2 | 3 | 178 | 1950 | 80 | 71 |
| | 6 | 282 | 2200 | 57 | 85 |
| 3 | 3 | 129 | 2150 | 73 | nicht best. |
| | 6 | 168 | 2250 | 78 | nicht best. |
| 4 | 3 | 135 | 1950 | 80 | nicht best. |
| | 6 | 170 | 2150 | 81 | nicht best. |
| 5 | 3 | 133 | 2500 | 84 | 66 |
| | 6 | 174 | 2200 | 84 | 64 |
| 6 | 3 | 127 | 2400 | 74 | 52 |
| | 6 | 181 | 2400 | 76 | 71 |
| 7 | 3 | 126 | 1950 | 60 | 53 |
| | 6 | 169 | 1920 | 60 | 65 |
| 8 | 3 | 133 | 2020 | 62 | 69 |
| | 6 | 171 | 2040 | 82 | 78 |
| A | 3 | 136 | 1500 | 22 | 43 |
| | 6 | 180 | 1630 | 21 | 85 |
| B | 3 | 157 | 1600 | 47 | nicht best. |
| | 6 | 294 | 1900 | 44 | nicht best. |
| C | 1 | 157 | 1900 | 55 | nicht best. |
| | 2 | 221 | 2000 | 51 | nicht best. |

Patentansprüche

1. Wäßrige Dispersion von Fluorpolymeren, enthaltend ein aus der Schmelze nicht verarbeitbares Tetrafluoräthylen-Polymerisat in kolloidaler Verteilung, ein nicht-ionisches Dispergiermittel und ein aus der Schmelze verarbeitbares Copolymerisat von Tetrafluoräthylen mit fluorhaltigen Comonomeren, dadurch gekennzeichnet, daß das aus der Schmelze verarbeitbare Copolymerisat von Tetrafluoräthylen mit fluorhaltigen Comonomeren eine mittlere Teilchengröße zwischen 5 und 100 µm aufweist und in der Dispersion in einem Anteil von 2 bis 50 Gew.-%, bezogen auf die Gesamt-Gewichtsmenge an Fluorpolymeren enthalten ist.

2. Wäßrige Fluorpolymeren-Dispersion gemäß Anspruch 1, dadurch gekennzeichnet, daß das aus der Schmelze verarbeitbare Copolymerisat von Tetrafluoräthylen mit einem fluorhaltigen Comonomeren eine mittlere Teilchengröße zwischen 10 und 50 µm aufweist.

3. Wäßrige Dispersion von Fluorpolymeren gemäß Anspruch 1 und 2, dadurch gekennzeichnet, daß das aus der Schmelze verarbeitbare Copolymerisat ein Copolymerisat von Tetrafluoräthylen und einem Perfluoralkylvinyläther ist, dessen Perfluoralkylrest 2 bis 4 C-Atome besitzt.

4. Wäßrige Dispersion von Fluorpolymeren gemäß Anspruch 1 und 2, dadurch gekennzeichnet, daß das aus der Schmelze verarbeitbare Copolymerisat ein Copolymerisat von Tetrafluoräthylen und Hexafluorpropylen ist.

5. Wäßrige Dispersion von Fluorpolymeren gemäß Anspruch 1 und 2, dadurch gekennzeichnet, daß das aus der Schmelze verarbeitbare Copolymerisat ein Copolymerisat von Tetrafluoräthylen, Hexafluorpropylen und einem Perfluoralkylvinyläther, dessen Perfluoralkylrest 2 bis 4 C-Atome besitzt, ist.

6. Wäßrige Dispersion von Fluorpolymeren gemäß Anspruch 1 bis 5, dadurch gekennzeichnet, daß das aus der Schmelze nicht verarbeitbare Tetrafluoräthylen-Polymerisat Polytetrafluoräthylen ist.

7. Wäßrige Dispersion von Fluorpolymeren gemäß Anspruch 1 bis 6, dadurch gekennzeichnet, daß die Dispersion zusätzlich ein Polysiloxan als Hilfsfilmbildner in einer Menge von 0,5 bis 5 Gew.-%, bezogen auf das Gesamtgewicht der Dispersion, enthält.

8. Wäßrige Dispersion von Fluorpolymeren gemäß Anspruch 1 bis 7, dadurch gekennzeichnet, daß darin übliche Füllstoffe und Pigmente enthalten sind.

9. Wäßrige Fluorpolymeren-Dispersionen gemäß Anspruch 1 bis 8 zur Verwendung als Beschichtungen und/oder Tränkungen von Geweben oder porösen Formkörpern.

Europäisches Patentamt

# EUROPÄISCHER RECHERCHENBERICHT

Nummer der Anmeldung 0010152

EP 79 10 3341

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| A | DE - A - 2 004 646 (HOECHST)<br>* Seite 2, Abschnitt 2 - Seite 5, Abschnitt 3; Seite 9, Abschnitt 4 *<br>-- | 1-9 |
| A | US - A - 412 619 (D.A. HOLMES)<br>* Spalte 1, Zeile 67 - Spalte 4, Zeile 65; Spalte 5, Zeilen 11-27; Beispiele *<br>-- | 1-9 |
| D | US - A - 3 051 683 (R.S. MALLOUK)<br>* Spalte 1, Zeile 52 - Spalte 2, Zeile 42; Spalte 5, Zeilen 8-15 *<br>-- | 1-9 |
| A | US - A - 3 896 071 (R.V. POIRIER)<br>* Spalte 1, Zeile 65 - Spalte 7, Zeile 10 *<br>-- | 1 |
| A | US - A - 3 019 206 (L.E. ROBB)<br>* Spalte 1, Zeile 67 - Spalte 3, Zeile 49 *<br>---- | 1 |

KLASSIFIKATION DER ANMELDUNG (Int.Cl.³)

C 08 L 27/18
C 03 C 25/02
C 08 J 5/04

RECHERCHIERTE SACHGEBIETE (Int. Cl.³)

C 08 L 27/18
C 03 C 25/02
C 08 J 5/04
C 09 D 3/78

KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

X Der vorliegende Recherchenbericht wurde für alle Patentansprüche erstellt.

| Recherchenort | Abschlußdatum der Recherche | Prüfer |
|---|---|---|
| Den Haag | 15-01-1980 | GERARDIN |